# EUROPÄISCHE PATENTSCHRIFT

(11) **EP 2 185 827 B1**
(45) Veröffentlichungstag und Bekanntmachung des Hinweises auf die Patenterteilung: **12.01.2011**
(21) Anmeldenummer: 08801809.8
(22) Anmeldetag: 03.09.2008
(51) Int. Cl.: F16B 35/04

(54) **MONTAGESCHRAUBE UND BEFESTIGUNGSANORDNUNG MIT EINEM HOHLKAMMERPROFIL**
MOUNTING SCREW AND FASTENING ARRANGEMENT WITH A HOLLOW CHAMBER PROFILE
VIS DE MONTAGE ET DISPOSITIF DE FIXATION COMPORTANT UN PROFILÉ À CHAMBRE CREUSE

(30) Priorität: 13.09.2007 DE 102007043705
(43) Veröffentlichungstag der Anmeldung: 19.05.2010
(73) Patentinhaber: fischerwerke GmbH & Co. KG, 72178 Waldachtal (DE); Dr. Hahn GmbH & Co. KG, 41189 Mönchengladbach-Wickrath (DE)
(72) Erfinder: JÄGER, Daniel, 77955 Ettenheim (DE); BÖGEL-PÖTTER, Jürgen, 41849 Wassenberg (DE); LENZE, Markus, 41334 Nettetal (DE)
(86) Internationale Anmeldenummer: PCT/EP2008/007176
(87) Internationale Veröffentlichungsnummer: WO 2009/036881

(56) Entgegenhaltungen:
- EP-A- 1 990 553
- DE-A1- 19 644 507
- DE-U1-202004 016 119

## Beschreibung

Die Erfindung betrifft eine Montageschraube mit den Merkmalen des Oberbegriffs des Anspruchs 1 sowie eine Befestigungsanordnung mit den Merkmalen des Anspruchs 5.

Aus der Druckschrift DE 20 2004 016 119 U1 ist eine Montageschraube zur Befestigung von Beschlagteilen, insbesondere von Bandteilen an Hohlkammerprofilen bekannt. Sie dient beispielsweise der Befestigung von Scharnieren an Fenstern oder Türen, welche einen Rahmen aufweisen, der aus mehreren stranggepressten Aluminiumprofilen besteht. Die bekannte Schraube weist einen Kopf mit einem sich hieran anschließenden Gewindeabschnitt auf, wobei sich der Kerndurchmesser des Außengewindes zunächst über einen Teilabschnitt konisch in Richtung des Kopfes erweitert und ansonsten weitgehend gleich bleibt. Charakteristisch an einer derartigen Schraube ist, dass der Kerndurchmesser des Außengewindes verhältnismäßig groß im Vergleich zum Außendurchmesser des Kopfes ist. Während dieses Verhältnis bei sonstigen Schrauben, beispielsweise metrischen Schrauben oder Holzschrauben, bei 1,5 oder deutlich darüber liegt, wird bei einer derartigen Montageschraube das Verhältnis eher unter diesem Wert liegen. Der Grund hierfür liegt darin, dass die Aufnahmebohrung für den Kopf im Beschlagteil aus optischen Gründen möglichst klein sein soll, während die Haltekraft durch einen möglichst großen Kerndurchmesser des Außengewindes maximiert werden kann. Ausschlaggebend hierfür ist, dass die Montageschraube aufgrund der Einbausituation in einem Hohlkammerprofil in der Regel nur in zwei oder drei relativ dünnen Profilstegen Halt findet.

Es hat sich gezeigt, dass derartige Befestigungsanordnungen insbesondere bei längeren Einsätzen dazu neigen, sich zu lockern. Der Erfindung liegt daher die Aufgabe zugrunde, eine Montageschraube bzw. eine Befestigungsanordnung mit einer derartigen Montageschraube vorzuschlagen, die dauerhaft eine feste Verbindung ermöglicht.

Diese Aufgabe wird durch die Montageschraube mit den Merkmalen des Anspruchs 1 sowie durch die Befestigungsanordnung mit den Merkmalen des Anspruchs 5 gelöst. Es wurde erkannt, dass das Lösen der Montageschraube in Zusammenhang steht mit der Beschichtung der Beschlagteile. Die Beschichtung kann beispielsweise in einem echten Auftrag, wie einer Lackschicht, oder in einer Gefügeumwandlung in der Oberfläche bzw. einer Kombination aus Gefügeumwandlung und einem Auftrag, beispielsweise durch Eloxieren, erfolgen. Beobachtungen zeigten, dass eine Montageschraube insbesondere unter Erschütterungen, wie sie beim Öffnen und Schließen von Türen auftreten können, bei solchen Beschichtungen dazu tendieren, sich zu lösen. Grund hierfür ist das geringe Drehmoment, das dem Lösen der Montageschraube entgegenwirkt. Dieses geringe Widerstandsmoment gegen Zurückdrehen liegt zum Einen an der Anlagefläche des Außengewindes in den Gewindefurchen, welche in den Profilstegen ausgeformt sind. Zum Anderen ist aber auch die Auflagefläche des Kopfes, im Folgenden als Widerlagerfläche bezeichnet, gering, da wie eingangs erwähnt das Verhältnis vom Außendurchmesser des Kopfes zum maximalen Kerndurchmesser des Außengewindes relativ klein ist. Basierend auf dieser Erkenntnis schlägt die Erfindung vor, dass die Widerlagerfläche eine Reibeinrichtung aufweist. Diese weist zwei Wirkungen auf, von der mindestens eine erfindungsgemäß zum Tragen kommt. Zum Einen gräbt sich die Widerlagerfläche beim Anziehen der Montageschraube in die korrespondierende Auflagerfläche des Beschlagteils ein. Allein hierdurch erhöht sich der Reibwert und damit das Widerstandsmoment gegen Ausdrehen erheblich. Zum Anderen kann die Reibeinrichtung außerdem die Wirkung haben, dass sie die Beschichtung im Bereich der Auflagerfläche zumindest teilweise löst. Hierdurch kann es zu einem Kontakt der Widerlagerfläche mit dem unterhalb der Beschichtung liegenden Material des Beschlagteils kommen. Aufgrund der veränderten Materialpaarung kann das tribologische System somit wiederum einen deutlich höheren Reibwert und damit verbunden ein höheres Widerstandsmoment aufweisen.

Vorzugsweise ist die Reibeinrichtung als Rändel ausgebildet. Dabei ist als Rändel eine gleichmäßig wiederkehrende, rillenartige Struktur zu verstehen. Daneben ist selbstverständlich aber auch eine ungleichmäßige Kontur aus Rillen, Kratern oder dgl. möglich, wobei ein Rändel herstellungstechnisch besonders einfach umzusetzen ist. Die Widerlagerfläche kann außerdem aber auch in anderer Form aufgerauht oder zusätzlich beschichtet sein. Auch ist die Kombination mit einem, beispielsweise mikroverkapselten, Kleber denkbar.

Eine bevorzugte Ausführungsform sieht vor, dass die Widerlagerfläche konisch ausgebildet ist. Dies hat insbesondere den Vorteil, dass die Widerlagerfläche gleichzeitig zentrierend auf das Beschlagteil wirken kann. Die Zentrierung kann jedoch auch über einen sich an die Widerlagerfläche anschließenden zylindrischen Teil des Kopfes erfolgen.

Um die Montageschraube bzw. deren Kopf möglichst tief in eine Aufnahmebohrung eines Beschlagteils versenken zu können, was aus optischen Gründen gefordert sein kann, sieht eine bevorzugte Ausführungsform der Erfindung vor, dass sich das Außengewinde mehr oder weniger direkt an das Widerlager des Kopfes anschließt, also der Abstand zwischen Widerlager und Beginn des Außengewindes maximal der zweifachen Gewindesteigung entspricht. Hierdurch wird erreicht, dass die Montageschraube auch dann, wenn sie sehr tief in das Beschlagteil eingeschraubt ist, mit dem Außengewinde in den dem Beschlagteil zugewandten Profilsteg des Hohlkammerprofils greifen kann. Somit kann dieser Profilsteg neben weiteren Profilstegen auch zum Halt der Montageschraube beitragen. Fertigungstechnisch kann es jedoch angezeigt sein, den Abstand zwischen Widerlager und Außengewinde nicht auf Null zu reduzieren, da sonst der Aufwand zur Erstellung des Außengewindes bzw. der Reibeinrichtung an der Widerlagerfläche unverhältnismäßig wird.

Die Erfindung wird nachfolgend anhand eines Ausführungsbeispiels näher erläutert.

Es zeigen:
- Figur 1: einer erfindungsgemäße Montageschraube; und
- Figur 2: dieselbe Montageschraube als Teil einer erfindungsgemäßen Befestigungsanordnung in Schnittdarstellung.

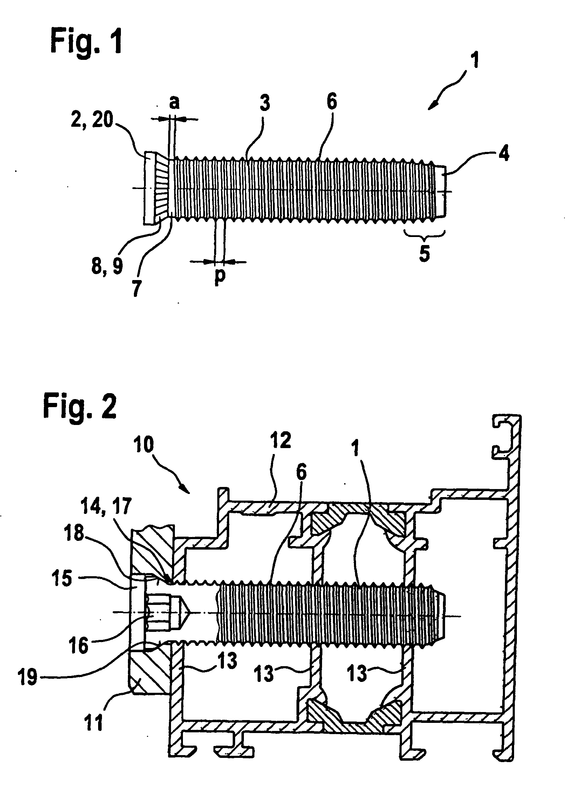

Die in Figur 1 dargestellte Montageschraube 1 weist einen Kopf 2 sowie einen Gewindeabschnitt 3 auf. Vom Einbringende 4 aus steigt der Kerndurchmesser der Montageschraube 1 auf einen Teilabschnitt 5 zunächst konisch an, bleibt jedoch dann im restlichen Gewindeabschnitt 3 konstant. Das Außengewinde 6 hat dabei eine gleich bleibende Flankenhöhe gegenüber dem Kerndurchmesser. Der Gewindeabschnitt 3 setzt sich bis kurz vor den Kopf 2 fort, so dass lediglich ein geringer Abstand a, der in etwa der Gewindesteigung p entspricht, als gewindefreier Abschnitt 7 verbleibt. An diesen gewindefreien Abschnitt 7 schließt sich der Kopf 2 mit einer konischen Widerlagerfläche 8 an. Diese Widerlagerfläche 8 weist eine als Rändel 9 ausgebildete Reibeinrichtung auf. An die Widerlagerfläche 8 schließt sich wiederum ein axial kurzer zylindrischer Kopfabschnitt 20 an. Der Außendurchmesser des Kopfes 2 in diesem Bereich entspricht in etwa dem 1,2- bis 1,3-fachen des Kerndurchmessers des Gewindeabschnitts 3.

Figur 2 zeigt die Montageschraube 1 als Teil einer Befestigungsanordnung 10, welche der Befestigung eines Beschlagteils 11 an einem Hohlkammerprofil 12 dient. Dieses Hohlkammerprofil 12 kann beispielsweise Teil eines Fensterrahmens sein, an dem als Beschlagteil 11 ein Scharnier oder dgl. befestigt wird. Das Hohlkammerprofil 12 weist mehrere Profilstege 13 auf, die dem Außengewinde 6 der Montageschraube 1 Halt geben. Durch den sehr kurzen gewindefreien Abschnitt 7 greift das Außengewinde 6 auch in den dem Beschlagteil 11 zugewandten Profilsteg 13 ein.

Zur Montage der Befestigungsanordnung 10 wird zunächst eine Befestigungsbohrung 14 in das Hohlkammerprofil 12 bzw. die Profilstege 13 eingebracht. Dann wird das Beschlagteil 11 aufgesetzt und die Montageschraube 1 durch eine Aufnahmebohrung 15 im Beschlagteil 11 hindurch in die Befestigungsbohrung 14 schraubend eingebracht. Hierzu weist die Montageschraube 1 einen Innensechskant 16 als Werkzeugangriffsfläche auf. Beim Einschrauben formt sich die Montageschraube 1 in der Befestigungsbohrung 14 ein korrespondierendes Innengewinde 17. Die Aufnahmebohrung 15 des Beschlagteils 11 weist eine konische Auflagerfläche 18 auf. Diese dient der konischen Widerlagerfläche 8 der Montageschraube 1 als gegenlager bzw. Anschlag beim Einschrauben. Aufgrund der Konizität der Widerlagerfläche 8 und der Auflagerfläche 18 des Beschlagteils 11 zentriert die Montageschraube 1 in diesem Bereich des Beschlagteils 11.

Durch das Rändel 9 an der Widerlagerfläche 8 kommt es zu einem teilweisen Ablösen der Oberfläche 19 des Beschlagteils 11 im Bereich der Auflagerfläche 18. Auch gräbt sich das Rändel 9 bis zu einem gewissen Grand in die Widerlagerfläche 8 ein. Hierdurch kommt es zu einem erhöhten Widerstandsmoment gegen ungewolltes Ausdrehen der Montageschraube 1, so dass sich diese selbst bei einer schwingenden Beanspruchung der Befestigungsanordnung 10 nicht löst.

### Bezugszeichenliste

### Montageschraube und Befestigungsanordnung mit einem Hohlkammerprofil

- 1: Montageschraube
- 2: Kopf
- 3: Gewindeabschnitt
- 4: Einbringende
- 5: Teilabschnitt
- 6: Außengewinde
- 7: gewindefreier Abschnitt
- 8: Widerlagerfläche
- 9: Reibeinrichtung/Rändel
- 10: Befestigungsanordnung
- 11: Beschlagteil
- 12: Hohlkammerprofil
- 13: Profilsteg
- 14: Befestigungsbohrung
- 15: Aufnahmebohrung
- 16: Innensechskant/Werkzeugangriffsflächen
- 17: Innengewinde
- 18: Auflagerfläche
- 19: Oberfläche
- 20: zylindrischer Kopfabschnitt
- a: Abstand
- p: Gewindesteigung

## Patentansprüche

1. Montageschraube (1) zur Befestigung von Beschlagteilen (11) an einem Hohlkammerprofil (12), mit einem Kopf (2), und einem Gewindeabschnitt (3) mit einem Außengewinde (6), wobei sich der Kerndurchmesser des Außengewindes (6) insbesondere konisch in Richtung des Kopfes (2) erweitert und das Verhältnis von Außendurchmesser des Kopfes (2) zum maximalen Kerndurchmesser des Außengewindes (6) zwischen 1,15 und 1,5, insbesondere zwischen 1,2 und 1,3, liegt, und wobei der Kopf (2) an seiner dem Gewindeabschnitt (3) zugewandten Seite eine Widerlagerfläche (8) aufweist, **dadurch gekennzeichnet, dass** die Widerlagerfläche (8) eine Reibeinrichtung (9) aufweist.

2. Montageschraube nach Anspruch 1, **dadurch gekennzeichnet, dass** die Reibeinrichtung als Rändel (9) ausgebildet ist.

3. Montageschraube nach einem der Ansprüche 1 oder 2, **dadurch gekennzeichnet, dass** die Widerlagerfläche (8) konisch ausgebildet ist.

4. Montageschraube nach einem der Ansprüche 1 oder 2, **dadurch gekennzeichnet, dass** sich das Außengewinde (6) in Richtung des Kopfes (2) bis zu einem Abstand a von der Widerlagerfläche (8) erstreckt, wobei a maximal dem Zweifachen der Gewindesteigung (p) des Außengewindes (6) entspricht.

5. Befestigungsanordnung (10) mit einem Hohlkammerprofil (12), einem Beschlagteil (11) und einer Montageschraube (1) nach einem der Ansprüche 1 bis 4, wobei das Beschlagteil (11) eine Oberfläche mit Beschichtung (19) aufweist.

6. i3efestigungsanordnung nach Anspruch 5, **dadurch gekennzeichnet, dass** die Widerlagerfläche (8) zentrierend mit dem Beschlagteil (11) in Wirkverbindung steht.

7. Befestigungsanordnung nach Anspruch 5 oder 6, **dadurch gekennzeichnet, dass** das Beschlagteil (11) eine Aufnahmebohrung (15) mit einer konischen Auflagerfläche (18) als Gegenlager für die Widerlagerfläche (8) der Montageschraube (1) aufweist.

8. Befestigungsanordnung nach einem der Ansprüche 5 bis 7, **dadurch gekennzeichnet, dass** die Beschichtung (19) des Beschlagteils (11) im Bereich einer mit der Widerlagerfläche (8) korrespondierenden Auflagerfläche (18) zumindest teilweise abgelöst Ist.

## Claims

1. Mounting screw (1) for fixing mounted parts (11) to a hollow profile (12), having a head (2) and having a threaded portion (3) with an external thread (6), the core diameter of the external thread (6) widening out, especially conically, in the direction of the head (2) and the ratio of the external diameter of the head (2) to the maximum core diameter of the external thread (6) being between 1.15 and 1.5, especially between 1.2 and 1.3, and the head (2) having an abutting surface (8) on its side facing the threaded portion (3), **characterised in that** the abutting surface (8) has a friction-providing arrangement (9).

2. Mounting screw according to claim 1, **characterised in that** the friction-providing arrangement is in the form of knurling (9).

3. Mounting screw according to one of claims 1 or 2, **characterised in that** the abutting surface (8) is of conical construction.

4. Mounting screw according to one of claims 1 or 2, **characterised in that** the external thread (6) extends in the direction of the head (2) until at a spacing a from the abutting surface (8), a corresponding to at most twice the thread pitch (p) of the external thread (6).

5. Fixing arrangement (10) having a hollow profile (12), a mounted part (11) and a mounting screw (1) according to one of claims 1 to 4, the mounted part (11) having a surface with coating (19).

6. Fixing arrangement according to claim 5, **characterised in that** the abutting surface (8) is in centring operative connection with the mounted part (11).

7. Fixing arrangement according to claim 5 or 6, **characterised in that** the mounted part (11) has a receiving hole (15) having a conical seating surface (18) as abutment for the abutting surface (8) of the mounting screw (1).

8. Fixing arrangement according to one of claims 5 to 7, **characterised in that** the coating (19) of the mounted part (11) has been removed, at least partially, in the region of a seating surface (18) corresponding with the abutting surface (8).

## Revendications

1. Vis de montage (1) destinée à la fixation de pièces de ferrure (11) à un profilé (12) à chambres creuses, comprenant une tête (2) et une région filetée (3) pourvue d'un filetage extérieur (6), sachant que le diamètre du noyau dudit filetage extérieur (6) présente, en particulier, un évasement tronconique en direction de la tête (2) et que le rapport, entre le diamètre extérieur de ladite tête (2) et le diamètre maximal du noyau dudit filetage extérieur (6), est compris entre 1,15 et 1,5, notamment entre 1,2 et 1,3, ladite tête (2) étant munie d'une surface de contre-butée (8) sur son côté tourné vers ladite région filetée (3), **caractérisée par le fait que** la surface de contre-butée (8) offre un système de frottement (9).

2. Vis de montage selon la revendication 1, **caractérisée par le fait que** le système de frottement est réalisé sous la forme d'un moletage (9).

3. Vis de montage selon l'une des revendications 1 ou 2, **caractérisée par le fait que** la surface de contre-butée (8) est de réalisation tronconique.

4. Vis de montage selon l'une des revendications 1 ou 2, **caractérisée par le fait que** le filetage extérieur (6) s'étend en direction de la tête (2), jusqu'à une distance a vis-à-vis de la surface de contre-butée (8), a correspondant alors, au maximum, au double du pas (p) dudit filetage extérieur (6).

5. Dispositif de fixation (10) comprenant un profilé (12) à chambres creuses, une pièce de ferrure (11) et une vis de montage (1) conforme à l'une des revendications 1 à 4, ladite pièce de ferrure (11) comportant une surface munie d'un revêtement (19).

6. Dispositif de fixation selon la revendication 5, **caractérisé par le fait que** la surface de contre-butée (8) est en liaison opérante avec la pièce de ferrure (11), avec effet de centrage.

7. Dispositif de fixation selon la revendication 5 ou 6, **caractérisé par le fait que** la pièce de ferrure (11) présente un perçage de réception (15) doté d'une surface tronconique d'appui (18) agissant comme une butée complémentaire dédiée à la surface de contre-butée (8) de la vis de montage (1).

8. Dispositif de fixation selon l'une des revendications 5 à 7, **caractérisé par le fait que** le revêtement (19) de la pièce de ferrure (11) est éliminé, au moins en partie, dans la région d'une surface d'appui (18) complémentaire de la surface de contre-butée (8).
